# FASCICULE DE BREVET EUROPEEN

(11) **EP 3 396 078 B1**
(45) Date de publication et mention de la délivrance du brevet: **17.07.2024**
(21) Numéro de dépôt: 18169625.3
(22) Date de dépôt: 26.04.2018
(51) Int. Cl.: E04B 1/41, F16B 13/08

(54) **DISPOSITIF D'ANCRAGE AMÉLIORÉ, NOTAMMENT POUR ÉLÉMENT DE PRÉCONTRAINTE**
VERBESSERTE VERANKERUNGSVORRICHTUNG, INSBESONDERE FÜR EIN VORSPANNELEMENT
IMPROVED ANCHORING DEVICE, IN PARTICULAR FOR PRESTRESSING ELEMENT

(30) Priorité: 27.04.2017 FR 1753657
(43) Date de publication de la demande: 31.10.2018
(73) Titulaire: Soletanche Freyssinet, 92500 Rueil-Malmaison (FR)
(72) Inventeur: SOLET, Ronan, 35510 CESSON SEVIGNE (FR); DEMEY, Nicolas, 92600 ASNIERES SUR SEINE (FR); GUYON, Eric, 13080 LUYNES (FR); BARBAROUX, Marie-Céline, 13012 MARSEILLE (FR); DUBREUIL, Julien, 13100 AIX EN PROVENCE (FR); VIARD, Jean, 13104 Sausset-les-Pins (FR)
(74) Mandataire: Plasseraud IP

(56) Documents cités:
- JP-A- 2005 105 677
- US-A1- 2002 081 160

## Description

L'invention se rapporte au domaine de l'ancrage d'éléments, en particulier d'éléments de précontrainte de type barre de précontrainte, à une structure donnée.

Pour les besoins de nombreuses structures, par exemple pour les infrastructures de production d'énergie, des équipements ou structures internes sont installés et ancrés à une masse de béton de cette structure par des éléments comportant classiquement des barres de précontraintes. Ces barres sont par exemple ancrées à l'intérieur de la masse de béton par des ancrages appelés tirants reposant par exemple sur l'emploi de plaques et d'écrous, et par exemple noyés dans le béton.

En cas de rupture de l'ancrage noyé ou bien de la barre qui est ancrée par lui à la structure, il est généralement nécessaire de récréer une forme d'ancrage à l'intérieur de la structure de béton.

Les ancrages connus à cet effet reposent pour la plupart sur une approche d'insertion de l'élément de précontrainte muni de son dispositif d'ancrage dans le béton, et de déploiement du dispositif d'ancrage, typiquement via un système de glissement entre cônes mâle et femelle ou par rotation d'un arbre à came.

Or ces approches présentent des inconvénients en ce qu'elles aboutissent à des dispositifs présentant une capacité d'ancrage *in fine* limitée.

JP 2005-105677 A décrit un exemple de système d'ancrage pour barre de précontrainte, muni d'éléments qui se déploient radialement pour réaliser l'ancrage. La barre de précontrainte a une partie filetée qui est couplée à un cône écarteur lorsqu'elle est introduite dans une cavité élargie formée au fond du trou formé dans le massif de béton. Au-delà du cône écarteur, une pièce d'expansion présente des fentes axiales (ou radiales) qui séparent des portions formant des ailettes déployables. Une pression ou une percussion sur la barre enfonce le cône écarteur dans la pièce d'expansion prenant appui au fond de la cavité, ce qui provoque le déploiement des ailettes de la pièce d'expansion. La tige est alors vissée pour que son extrémité inférieure filetée s'engage sur un taraudage formé à l'intérieur de la pièce d'expansion, dont la rotation est empêchée par des reliefs qui agrippent le béton au fond de la cavité. L'ensemble est remonté pour que les ailettes viennent en butée contre l'épaulement supérieur de la cavité élargie formée dans le béton. Un problème avec ce système d'ancrage est que le moindre désalignement de la pièce d'expansion lors du déploiement forcé des ailettes empêche d'y visser la barre de précontrainte et compromet donc l'ancrage. Le même risque se manifeste lorsque l'agrippement du béton par les reliefs formés à la base de la pièce d'expansion est insuffisant. Lorsque cela se produit, l'emplacement prévu pour l'ancrage devient difficilement utilisable, la pièce d'expansion ne pouvant plus être extraite sans enlever un volume de béton conséquent. Pour rendre possible le déploiement des ailettes et pour réduire ce risque, les zones de la pièce d'expansion amenées à se déformer à la base des ailettes peuvent avoir une section relativement mince, mais ceci n'est pas favorable à la résistance qu'offre l'ancrage aux contraintes induites les efforts de traction auxquels la barre est soumise. Le document US 2002/081160 A1 décrit un dispositif d'ancrage avec des éléments d'ancrage sur deux étages et disposés de manière radialement espacée pour augmenter la force d'ancrage.

L'invention vise à améliorer la situation.

À cet effet, l'invention concerne un dispositif d'ancrage adapté pour l'ancrage à une structure d'un élément à ancrer ayant un côté distal et un côté proximal, notamment d'un élément de précontrainte. Le dispositif d'ancrage est tel que défini dans la revendication 1.

Ce dispositif procure un ancrage très efficace et simple à mettre en oeuvre. Il ne présente pas les inconvénients du dispositif selon JP 2005-105677 A du fait que le couplage de l'embase de l'étage d'extrémité sur l'élément à ancrer est maintenu lorsque les éléments d'ancrage sont déployés.

Des modes de réalisation particuliers du dispositif d'ancrage sont précisés aux revendications 2 à 10.

L'invention concerne en outre un procédé d'ancrage à une structure d'un élément à ancrer, tel que défini dans la revendication 11. Des modes de réalisation particuliers du procédé sont précisés aux revendications 12 et 13.

L'invention sera mieux comprise à la lecture de la description détaillée qui va suivre, donnée uniquement à titre d'exemple et faite en référence aux Figures annexées, sur lesquelles :
- la Figure 1 illustre un ancrage au sens de l'invention ;
- la Figure 2 illustre un dispositif d'ancrage selon l'invention ;
- les Figures 3a et 3b illustrent une embase d'ancrage selon l'invention :
- les Figures 4a et 4b illustrent un élément d'ancrage selon l'invention ;
- la Figure 5 illustre un organe de coincement selon l'invention ;
- les Figures 6a à 6c illustrent un dispositif d'ancrage selon l'invention au cours de son déploiement ; et
- la Figure 7 est un diagramme-bloc illustrant un procédé d'ancrage selon l'invention.

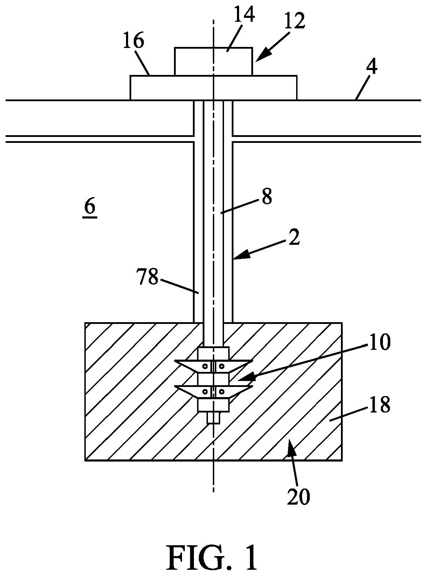

La Figure 1 illustre un système d'ancrage 2 par lequel un équipement 4, de type quelconque, est ancré à une structure 6.

Dans le contexte de l'invention, la structure 6 est avantageusement une structure en béton. Elle forme par exemple une structure d'une infrastructure plus importante, telle qu'une installation de production d'énergie, un ouvrage de génie civil, etc.

Le système d'ancrage 2 comprend un élément à ancrer 8 prévu pour solidariser l'équipement 4 à la structure 6, ainsi qu'un dispositif d'ancrage 10 par lequel l'élément 8 est couplé mécaniquement à la structure 6. Un autre dispositif de fixation 12 solidarise l'équipement 4 à l'élément à ancrer 8 pour immobiliser celui-ci par rapport à la structure 6.

Dans la suite de la présente description, l'élément 8 est une barre de précontrainte ayant un côté distal destiné à pénétrer dans la structure 6 et un côté proximal accessible en surface. La barre 8 est typiquement en métal, par exemple en acier ou en fonte. Le métal est par exemple usiné.

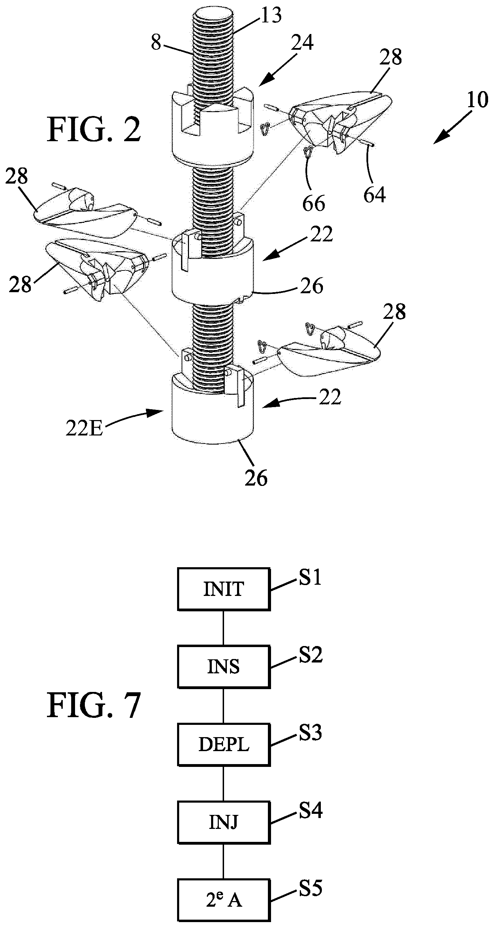

Avantageusement, la barre 8 présente un filetage 13 (Figure 2).

Le dispositif de fixation 12 inclut par exemple un écrou 14 vissé sur le filetage de la barre 8, ainsi qu'une plaque 16 contre laquelle l'écrou 14 est en appui pour maintenir en place l'équipement 4.

Le dispositif d'ancrage 10 peut être passif. Avantageusement, il s'agit d'un ancrage dont la configuration ne peut plus être modifiée une fois l'ancrage mis en place sans causer sa dégradation voire sa destruction.

Toujours en référence à la Figure 1, le dispositif d'ancrage 10 peut être configuré pour ancrer la barre 8 à la structure 6 par l'intermédiaire d'un matériau de remplissage 18 emplissant au moins une partie d'une chambre de réception 20 ménagée dans la structure 6, et dans lequel il est au moins en partie noyé, comme décrit plus en détail ci-après. Le matériau de remplissage 18 est durcissable, et comprend par exemple un coulis de ciment ou un mortier de scellement.

En référence à la Figure 2, le dispositif d'ancrage 10 agencé sur la barre 8 comprend des étages d'ancrage 22 et un organe de coincement 24.

L'un des étages 22, situé sur le côté distal de la barre 8, forme un étage d'extrémité 22E. Ici, par étage d'extrémité, on entend qu'il constitue le dernier étage au sein de la succession d'étages 22. Dans le cas non revendiqué où le dispositif d'ancrage 10 comprend un unique étage 22, cet étage forme donc l'étage d'extrémité. Dans le cas selon l'invention où le dispositif d'ancrage 10 comprend plusieurs étages, l'étage d'extrémité correspond à l'étage 22 situé du côté distal.

Chaque étage 22 comprend une embase 26 et au moins un élément d'ancrage 28 articulé sur l'embase.

L'embase 26 de l'étage d'extrémité 22E peut être fixe par rapport à la barre 8. En particulier, elle peut présenter un taraudage (non visible sur les dessins) pour être couplée avec la barre 8 via le filetage 13.

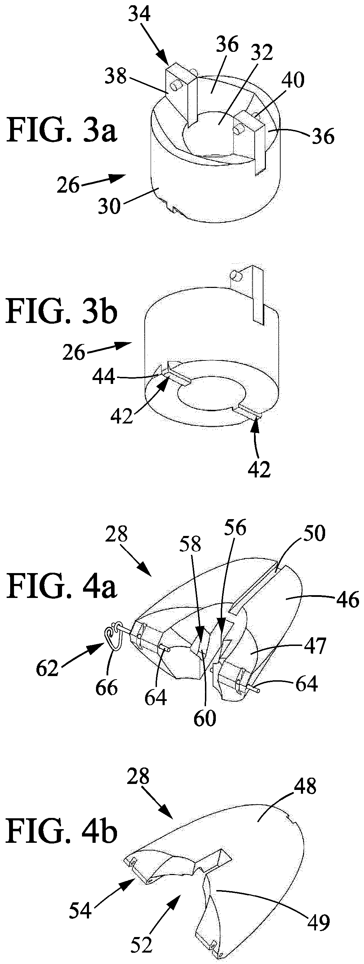

En référence aux Figures 2, 3a et 3b, chaque embase 26 est configurée pour supporter les éléments d'ancrage 28 et relier ces derniers à la barre 8.

Chaque élément d'ancrage 28 se présente par exemple sous la forme d'une aile. Cette aile peut être vue comme un pétale qui s'ouvre, ou se déploie, lorsque le dispositif d'ancrage est activé.

Chaque aile 28 est par exemple réalisée en acier.

Chaque embase 26 présente une portion principale 30, un passage 32, et une articulation 34 pour chaque aile 28 de l'étage correspondant. En outre, elle comprend pour chaque aile 28 de l'étage associé une zone 36 destinée à coopérer avec l'aile 28 pour maintenir celle-ci dans une position déployée par coincement, comme décrit plus en détail ci-après.

La portion principale 30 présente par exemple une forme générale cylindrique autour du même axe que la barre 8. La portion principale 30 est par exemple réalisée à partir d'acier ou d'un autre métal.

Le passage 32 est prévu pour recevoir la barre 8. Le passage 32 s'étend au centre de la portion principale 30. Avantageusement, il présente une forme générale cylindrique et s'étend selon l'axe de la portion principale 30, c'est-à-dire de manière centrale relativement à la portion principale 30. Sa section est avantageusement circulaire.

Avantageusement, la paroi interne du passage 32 de l'embase 26 de l'étage d'extrémité 22E est pourvue d'un taraudage complémentaire du filetage 13 de la barre 8. Ce taraudage peut éventuellement avoir une configuration de frein filet pour bloquer l'embase 26 de l'étage d'extrémité 22E sur la barre 8 lorsque le filetage 13 y est serré. En variante ou en complément, un contre-écrou peut contribuer au blocage de l'embase 26 de l'étage d'extrémité 22E sur la barre 8. Une autre possibilité encore pour assurer ce blocage est que le taraudage formé dans l'embase 26 de l'étage d'extrémité 22E soit interrompu au-delà d'une certaine profondeur, le taraudage pouvant en particulier être formé dans un trou borgne.

La paroi interne du passage 32 des embases 26 des étages 22 autres que celui d'extrémité est configurée pour autoriser le glissement de ces embases 26 le long de la barre 8. À cet effet, les parois internes 32 de ces embases 26 peuvent être dépourvues de taraudage complémentaire du filetage de la barre 8. Les embases 26 de ces étages sont avantageusement simplement enfilées sur la barre 8. Un jeu peut être prévu entre la paroi interne du passage 32 et le filetage 13 de la barre 8.

Les éléments d'articulation 34 sont respectivement associés aux éléments d'ancrage 28. Ils comprennent chacun un montant 38 et un axe 40 porté par le montant. Avantageusement, chaque étage comprend deux éléments d'ancrage 28, et ainsi deux articulations 34.

Le montant 38 se présente avantageusement sous la forme d'une plaque s'étendant parallèlement à l'axe de la portion principale 30, dans un plan radial par rapport à cet axe.

Le montant 38 s'étend longitudinalement à partir d'une face d'extrémité de la portion principale 30 associée, par exemple celle dirigée vers l'organe de coincement 24.

Les montants 38 sont avantageusement diamétralement opposés par rapport à la portion principale 30.

Chaque axe 40 est agencé au niveau du montant 38 et est orthogonal au plan moyen du montant 38 et à l'axe de la portion principale 30, c'est-à-dire à celui de la barre 8.

Les zones 36 sont ménagées dans la face d'extrémité à partir de laquelle les articulations 34 s'étendent.

Elles se présentent avantageusement sous la forme de dépressions de forme complémentaires de régions des éléments d'ancrage 28 décrites-ci-après. Par exemple, chaque zone 36 se présente sous la forme d'une dépression concave s'étendant sur environ la moitié de la circonférence de la face d'extrémité correspondante de l'embase, et s'étend de part et d'autre de l'articulation 34 associée.

Selon l'invention, une embase 26 comprend en outre au moins un premier élément de guidage 42 destiné à coopérer avec un deuxième élément de guidage décrit ci-après et porté par une aile d'un étage adjacent pour prévenir la rotation de cette aile autour de la barre 8 lors de l'ancrage de la barre 8 via le dispositif d'ancrage 10.

Chaque premier élément de guidage 42 comprend avantageusement une languette s'étendant en saillie de la face d'extrémité opposée à celle portant les articulations 34. Cette languette s'étend radialement par rapport à l'axe de l'embase. Les deux languettes sont diamétralement opposées comme le montre la partie inférieure de la figure 3b.

Ces languettes sont respectivement destinées à coopérer avec une rainure 50 de largeur complémentaire portée par une aile de l'étage adjacent pour guider le déploiement de l'aile tout en prévenant sa rotation autour de la barre 8, comme décrit ci-après.

Avantageusement, le premier élément de guidage 42 comprend en outre un chanfrein 44 ménagé dans l'arête périphérique de la face d'extrémité considérée au niveau de la languette, et destiné à amorcer le guidage de l'aile par le premier élément de guidage 42.

En référence aux Figures 2, 4a et 4b, chaque aile 28 est adaptée pour générer un effort d'ancrage pour ancrer et coupler mécaniquement la barre 8 à la structure 6 pour l'immobilisation relative de l'équipement 4 et la structure 6. Comme indiqué précédemment, dans le contexte de l'invention, avantageusement, ce couplage mécanique est mis en oeuvre via l'emploi d'un matériau de remplissage 18 dans lequel les éléments d'ancrage 28 sont destinés à être noyés.

Chaque étage 22 comprend avantageusement deux éléments d'ancrage 28. Ils sont par exemple agencés de manière symétrique de part et d'autre de la barre 8.

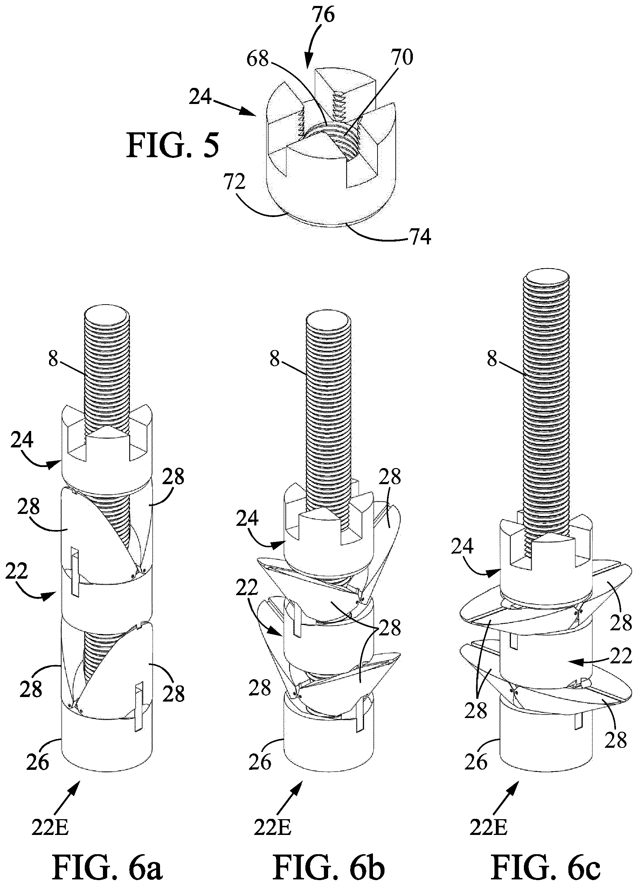

Chaque aile 28 est articulée sur l'embase 26 correspondante de façon à être déplaçable entre une position repliée (Figure 6a) et une position déployée (Figure 6c).

La position repliée est avantageusement une position dans laquelle l'aile 28 minimise le rayon du cylindre centré sur la barre 8 dans lequel il est inscrit. Par exemple, dans cette position repliée, l'aile est inscrite dans le cylindre généré par les embases 26. Autrement dit, l'encombrement radial des embases et des ailes 28 est sensiblement identique.

Par exemple, dans la position repliée, la face externe de l'aile 28 s'étend de manière sensiblement parallèle à la barre 8.

Dans la position déployée, l'aile 28 est déployée radialement par rapport à cette position repliée, c'est-à-dire au moins par rotation dans un plan radial. Avantageusement, dans cette position déployée, l'aile 28 maximise le rayon du cylindre centré sur la barre 8 dans lequel elle est inscrite.

Dans la position déployée, avantageusement, l'aile s'étend sensiblement orthogonalement à la barre 8 et radialement, son plan médian étant sensiblement radial.

Avantageusement, dans la position déployée, les deux éléments d'ancrage d'un étage donné sont au contact l'un de l'autre au niveau d'un bord interne (décrit ci-après) qu'ils présentent.

Par exemple, ce contact résulte d'un déplacement radial imprimé aux éléments 28 lors de leur passage en position déployée.

En outre, avantageusement, les éléments d'ancrage sont au contact de la barre 8 au niveau du bord interne.

Avantageusement, le rapport entre l'encombrement radial en position d'ancrage et l'encombrement radial en position repliée des éléments d'ancrage est supérieur ou égal 1,35. Préférentiellement, ce rapport est supérieur ou égal à 2.

À titre d'exemple, la barre 8 présente un diamètre compris entre 20 et 100 mm, et en particulier entre 25 et 75 mm. En position repliée, les éléments d'ancrage présentent par exemple un encombrement radial de 90 mm, et un encombrement radial d'environ 200 mm en position déployée.

Chaque aile 28 présente une face interne 46 dirigée vers la barre 8 en position repliée et vers l'organe de coincement 24 en position déployée.

En outre, elle présente une face externe 48 destinée à être orientée à l'opposé de la barre 8 en position repliée et à l'opposé de l'organe de coincement 24 en position déployée.

La face interne 46 présente par exemple une forme générale de portion d'ellipse tronquée le long de son demi-grand axe (par exemple selon son demi-petit axe, ou bien parallèlement à celui-ci de façon générale), et dont le demi-grand axe s'étend dans un plan radiale par rapport à la barre 8.

Elle comprend un deuxième élément de guidage 50 destiné à coopérer avec le premier élément de guidage 42 porté par l'embase 26 de l'étage 22 voisin pour guider l'aile lors de son passage vers la position déployée, notamment afin de prévenir sa rotation autour de la barre 8.

Le deuxième élément de guidage 50 se présente par exemple sous la forme d'une rainure de largeur complémentaire de la languette portée par la face d'extrémité correspondante de l'embase de l'étage 22 voisin. Cette rainure s'étend avantageusement jusqu'à l'extrémité longitudinale de l'aile 28 opposée à la barre 8. En outre, elle présente avantageusement une profondeur supérieure ou égale à la hauteur de la languette.

La face interne 46 est avantageusement sensiblement plane.

La face externe 48 forme une surface située sous la face interne (suivant l'orientation de la Figure 4a) qui s'étend entre les bords de la face interne. La face externe 48 présente une configuration générale convexe et est inclinée par rapport à la face interne 46. Elle est avantageusement inscrite dans un cylindre.

Chaque aile 28 comprend en outre, sur son côté adjacent à la barre 8, une région fonctionnelle 52 pour l'articulation de l'aile sur son embase 26. Cette région fonctionnelle 52 inclut une gorge centrale 56 pour le passage du montant 38 lors du déploiement de l'aile 28. En outre, la région 52 inclut un module d'articulation 56 complémentaire de l'articulation 34 portée par l'embase 26 pour l'articulation de l'aile 28 sur l'embase 26.

La gorge 56 se présente sous la forme d'une fente d'une largeur supérieure à celle de l'épaisseur du montant. Elle s'étend longitudinalement, symétriquement et parallèlement au plan médian de l'aile 28.

Le module d'articulation 58 comprend avantageusement des rails 60 ménagés dans les parois de la gorge centrale 56 et configurés pour coopérer avec l'axe 40 lors du déploiement de l'aile 28, en particulier pour guider le mouvement relatif de l'axe 40 et de l'aile 28.

Avantageusement, les rails 60 sont agencés pour appliquer à l'aile 28 un déplacement radial relativement à la barre 8 lors du déploiement de l'aile. Lors de ce déplacement radial, l'aile 28, et plus particulièrement son bord interne 54, se rapproche de la barre 8.

Par exemple, le déplacement radial amène les bords internes 54 respectifs des deux ailes de l'étage considéré au contact l'un de l'autre en configuration déployée de ces ailes, et avantageusement au contact de la barre 8.

La région 52 comprend avantageusement une dépression agencée au niveau du bord interne et tournée vers la barre 8 en position dépliée. Cette dépression présente une forme adaptée pour épouser une partie de la circonférence de la barre 8. Cette dépression assure que l'aile ne bute pas contre la barre 8 en cours de déploiement.

La paroi de l'aile définissant cette dépression peut être en appui contre la barre 8 en position déployée. Alternativement, la paroi de l'aile définissant cette dépression est écartée de la barre 8 en position déployée.

Avantageusement, la région 52 inclut également une dépression formant une concavité dans la face supérieure qui s'étend depuis le bord interne 54. Avantageusement, la rainure de l'élément de guidage 50 débouche dans cette dépression. Cette dépression reçoit la barre 8 lorsque l'aile est en position repliée, et permet ainsi de diminuer l'encombrement radial du dispositif d'ancrage 10.

Avantageusement, chaque étage 22 comprend en outre un module de rappel 62 adapté pour exercer sur les ailes 28 de l'étage 22 considéré une force de rappel élastique vers la position repliée.

Avantageusement, le module de rappel 62 inclut au moins un axe de rotation 64 par aile 28, ainsi qu'au moins un élément de rappel élastique 66 de type ressort coopérant avec des axes de rotation 64 respectifs des deux ailes pour coupler mécaniquement les ailes d'un étage l'une à l'autre.

Dans la position déployée, la force de rappel tend à rapprocher les ailes 28 de l'étage considéré l'une de l'autre.

La force de rappel peut aussi tendre à écarter les ailes de la position repliée lorsque celles-ci se trouvent dans cette position. Dans cette configuration, par exemple, chaque étage 22 comprend un élément de rétention, tel qu'une ceinture élastique, pour la rétention des ailes en position repliée. Cet élément de rétention est par exemple adapté pour rompre ou s'escamoter lors du déploiement des ailes.

Alternativement, la force de rappel peut aussi tendre à maintenir les ailes dans la position repliée lorsque celles-ci se trouvent dans cette position.

Les éléments de rappel élastique 66 présentent par exemple une forme générale coudée, par exemple une forme de U ou de V, dont chaque branche reçoit un axe de rotation 64, typiquement à son extrémité. Les éléments de rappel élastique 66 sont configurés pour être en position de repos lorsque les deux ailes 28 associées sont en position repliée et être rappelés vers cette position de repos, en particulier lorsqu'ils sont sollicités par les ailes lorsqu'elles se déplacent depuis leur position repliée.

Les axes de rotation 64 sont par exemple agencés dans l'aile 28 au niveau du bord interne 54 chacun dans un orifice prévu à cet effet, par exemple à raison de deux par aile 28. Ils sont agencés orthogonalement à la barre 8. Chaque orifice est optionnellement accessible par une fenêtre ménagée dans le bord interne de l'aile 28 considérée pour la mise en prise de l'axe 64 et de l'élément de rappel élastique 66 associé via cette fenêtre.

Avantageusement, le module de rappel 62 comprend au moins deux tels éléments de rappel élastique 66 raccordant les ailes 28 entre elles, les éléments de rappel élastique étant agencés de part et d'autre de la barre 8.

En référence aux Figures 4a et 4b, la face interne 46 des ailes présente une région 47 destinée à être en appui contre une face d'extrémité de l'embase de l'étage 22 précédent (ou de l'organe de coincement) pour maintenir les ailes en position déployée. Cette région 47 s'étend de part et d'autre du demi-grand axe aux abords du bord interne 52. Avantageusement, elle correspond à une portion de disque de diamètre sensiblement égal à celui des embases 26 et/ou de l'organe de coincement, éventuellement moyennant la prise en compte de la dépression ménagée dans la face interne 46 et définie par la région fonctionnelle 52.

La région 47 est par exemple délimitée par une dépression ménagée au sein de la face interne 46. Alternativement, elle est sur un même plan que le reste de la face interne 46.

Par ailleurs, la face externe 48 présente une région 49 qui s'étend à partir du bord interne 54, et qui est de forme complémentaire de la zone 36 portée par l'embase 26 de l'étage 22 suivant le long de la barre 8. Cette région 49 est avantageusement convexe.

La région 49 d'une aile 28 et la zone 36 d'une embase 26 sont au contact l'une de l'autre, de même que la région 47 de l'aile 28 et la face inférieure de l'embase 26 de l'étage adjacent ou de l'organe de coincement, pour coincer les ailes de l'étage 22.

Avantageusement, l'embase 26 d'un étage donné est orientée suivant un angle non nul, et de préférence sensiblement égal à 90°, autour de la barre 8, par rapport à l'embase d'un étage voisin.

En référence à la Figure 5, l'organe de coincement 24 est agencé sur la barre 8 de façon à y être mobile pour provoquer le déploiement des ailes 28 jusqu'à une position de coincement le long de la barre 8. Dans cette position de coincement, les ailes de chaque étage d'ancrage sont maintenues immobiles en position d'ancrage par coincement des ailes 28 induit par l'organe de coincement 24 et l'étage d'extrémité 22E.

L'organe de coincement 24 coopère avec le filetage 13 de la barre 8 pour se déplacer le long de la barre 8. A cet effet, l'organe de coincement 24 présente une configuration générale d'écrou.

Avantageusement, il présente une forme générale cylindrique, par exemple à section circulaire, et présente un orifice central 68 pourvu d'un taraudage 70 complémentaire du filetage 13 de la barre 8.

L'organe de coincement 24 présente une face d'extrémité 72 destinée à être tournée vers les ailes 28. Cette face présente avantageusement une configuration plane.

Avantageusement, l'organe de coincement 24 présente en outre sur le pourtour de sa face d'extrémité 72 un chanfrein 74.

L'organe de coincement 24 comprend en outre une empreinte 76 pour la réception d'une portion d'outil pour la mise en rotation de l'organe de coincement 24 autour de la barre 8 et son déplacement résultant le long de la barre 8. Cet outil est par exemple adapté pour être enfilé sur la barre 8.

L'empreinte 76 se présente par exemple sous la forme d'une encoche ou d'un créneau ménagé dans la face supérieure de l'organe 24.

Une fois que le dispositif d'ancrage 10 a été assemblé sur la barre 8, l'embase 26 de l'étage d'extrémité 22E est couplée sur la barre 8 par l'engagement du filetage 13 dans son taraudage. Ce couplage est tel que l'embase 26 de l'étage d'extrémité 22E est empêchée de se déplacer en direction du côté distal au moment où l'organe de coincement 24 est actionné pour se déplacer vers le côté distal et provoquer ainsi le déploiement des ailes 28. Cet empêchement peut résulter du simple frottement entre le filetage et le taraudage, amplifié par l'angle que forment les filets. Il peut être renforcé par l'un ou l'autre des moyens mentionnés ci-dessus (frein filet, contre-écrou, interruption du taraudage, etc.).

Un procédé d'ancrage selon l'invention va maintenant être décrit en référence aux Figures 6a à 6c et 7.

Lors d'une étape initiale S1, on dispose les étages 22 du dispositif d'ancrage 10 souhaité sur la barre 8. À cet effet, l'étage d'extrémité 22E est initialement installé sur la barre 8 par mise en coopération de son taraudage avec le filetage 13, puis vissé jusqu'au blocage de l'embase 26 à la position souhaitée. Le ou les autres étages sont ensuite enfilés sur la barre 8 via leur passage 32. Les ailes 28 sont alors en position repliée du fait du rappel exercé par les éléments de rappel élastique 66.

L'organe de coincement 24 est ensuite disposé sur la barre 8 et est déplacé le long de celui-ci jusqu'à venir au voisinage ou au contact de l'étage 22 mis en place en dernier.

La configuration obtenue est alors celle de la Figure 6a.

Lors d'une étape S2, la barre 8, et plus spécifiquement son extrémité distale munie du dispositif d'ancrage 10 ainsi formé, est insérée dans un orifice, ou carottage, 78 ménagé dans la structure 6 et qui débouche dans la chambre optionnelle 20.

Lors d'une étape S3, les ailes 28 passent de leur position repliée à leur position déployée.

Pour ce faire, l'écrou formé par l'organe de coincement 24 est serré sur la barre 8 pendant que celle-ci est tenue par son côté proximal pour être empêchée de pivoter. Ce serrage déplace l'organe de coincement 24 vers le côté distal où se trouve l'étage d'extrémité 22E. Du fait que l'embase de l'étage d'extrémité 22E est bloquée relativement à la barre 8 pour ne plus se déplacer vers son côté distal, cette embase forme une butée pour les objets engagés sur la barre 8, qui sont comprimés lors de l'étape S3.

Plus spécifiquement, lors du déplacement de l'organe de coincement 24, le chanfrein 74 de l'organe de coincement 24 engage l'extrémité des ailes 28 de l'étage 22 voisin, et l'organe de coincement contraint le passage progressif des ailes en position déployée. Ainsi, les ailes sont poussées à pivoter par rapport à leur embase, l'extrémité libre des ailes pivotant progressivement en restant dans un plan radial par rapport à la barre 8.

Lors de ce mouvement, l'axe 40 glisse le long des rails 60 ménagés dans la gorge 56, guidant ainsi la rotation de l'aile correspondante. En outre, les ressorts 66 sont déformés élastiquement, et exercent également une forme de guidage du mouvement des ailes 28.

Une fois les ailes 28 d'un étage 22 donné passées en position déployée, l'embase 26 de cet étage est à son tour poussée par les étages précédents. Cette embase 26 se déplace alors vers le côté distal et provoque le passage des ailes 28 de cet étage vers leur position déployée. Pour le déploiement effectif d'une aile, les premiers éléments de guidage 42 des embases engagent les deuxièmes éléments de guidage 50 de façon à induire le passage des ailes vers leur position déployée et à prévenir leur rotation autour de la barre 8.

La Figure 6b illustre un état intermédiaire du dispositif d'ancrage 10 dont les ailes sont en cours de déploiement.

Cette étape est poursuivie jusqu'à ce que l'organe de coincement parvienne en butée contre l'étage 22 voisin dans une position de coincement. Ce faisant, les ailes sont graduellement déployées, les embases 26 étant en outre rapprochées les unes des autres, de façon à finalement coincer les ailes en position déployée. Les ailes 28 sont alors coincées entre l'embase sur laquelle elles sont articulées et celle de l'étage voisin ou l'organe de coincement 24. Cet effet de coincement est induit d'une part par l'embase 26 de l'étage d'extrémité 22E qui fonctionne comme une butée, et d'autre part par l'organe de coincement 24 qui a été actionné par l'utilisateur.

Dans la position de coincement, la région 47 de la face interne 46 d'une aile donnée 28 est en appui contre la face d'extrémité 72 de l'organe de coincement ou de l'embase de l'étage 22 précédent. En outre, la région 49 de sa face externe 48 est en appui contre la zone 36 de l'embase associée.

Dans le cadre de cette étape, le déplacement des embases 26 le long de la barre 8 peut commencer avant que les ailes de l'étage correspondant soient complètement déployées. En pratique, le détail du déroulement de cette étape dépend des jeux et ajustements des pièces entre elles. En outre, ce détail n'est pas contraignant pour l'objectif final, qui est le déploiement complet des ailes 28.

La configuration obtenue à l'issue de cette étape est avantageusement verrouillée via le verrouillage de l'organe de coincement 24 dans sa position de coincement.

Par exemple, pour ce faire, l'organe de coincement 24 est serré, puis la position de l'organe 24 est par suite maintenue figée par le matériau de remplissage 18 une fois celui-ci introduit dans la chambre 20.

Lors d'une étape S4, on couple mécaniquement le dispositif d'ancrage 10 à la structure 6. Pour ce faire, avantageusement, on injecte le matériau de remplissage 18 dans la chambre 20 de sorte que les ailes 28 y baignent, puis on laisse ce matériau 18 faire prise et durcir pour coupler mécaniquement la barre 8 à la structure 6 via le matériau 18 et les immobiliser l'une par rapport à l'autre via le dispositif d'ancrage 10.

Lors d'une étape S5, on couple mécaniquement la barre 8 à l'équipement 4 via la mise en place du dispositif de fixation 12. On remarque que cette étape S5 peut intervenir avant ou après l'étape S4.

L'invention présente plusieurs avantages.

Elle permet de créer un ancrage d'excellente tenue mécanique, notamment du fait du coincement des ailes 28 entre l'embase 26 de l'étage d'extrémité 22E et l'organe de coincement 24 qui est tel que l'effort d'ancrage est transmis directement par ces éléments à la barre 8 et ne transite pas par un élément secondaire tel qu'un axe d'articulation ou équivalent. En outre, l'intégration de cet ancrage est de nature à grandement limiter la dégradation de la structure 6. Par ailleurs, sa conception est simple, et son caractère modulaire permet d'ajuster de façon fine le principe de l'invention aux conditions d'utilisation envisagées.

En outre, le dispositif d'ancrage peut être utilisé comme ancrage de remplacement d'un ancrage passif, mais permet également la création d'un nouvel ancrage du fait de sa très bonne tenue mécanique et de son pouvoir d'ancrage supérieur à celui des ancrages analogues connus.

## Revendications

1. Dispositif d'ancrage adapté pour l'ancrage à une structure (6) d'un élément à ancrer (8) ayant un côté distal et un côté proximal, le dispositif d'ancrage (10) comprenant :
- des étages d'ancrage (22), chaque étage d'ancrage comprenant une embase (26) et au moins un élément d'ancrage (28) articulé sur l'embase pour être déplaçable entre une position repliée et une position déployée radialement par rapport à l'élément à ancrer ; et
- un organe de coincement (24) déplaçable le long de l'élément à ancrer en direction du côté distal de façon à provoquer le déplacement du ou des éléments d'ancrage depuis la position repliée vers la position déployée,
dans lequel les étages d'ancrage (22) incluent un étage d'extrémité (22E) vers le côté distal et au moins un étage d'ancrage autre que l'étage d'extrémité (22E), dans lequel l'embase (26) de chaque étage d'ancrage autre que l'étage d'extrémité est déplaçable le long de l'élément à ancrer (8), le déplacement de l'organe de coincement (24) en direction du côté distal provoquant le rapprochement des embases entre elles,
dans lequel l'embase (26) de l'étage d'extrémité (22E) peut être couplée sur l'élément à ancrer (8) de manière à être empêchée de se déplacer en direction du côté distal lors du déplacement de l'organe de coincement (24) qui provoque le déploiement du ou des éléments d'ancrage (28), et
dans lequel l'embase (26) d'un étage d'ancrage comprend un premier élément de guidage (42) et au moins un élément d'ancrage d'un étage d'ancrage voisin comprend un deuxième élément de guidage (50), les premier et deuxième éléments de guidage (42, 50) coopérant l'un avec l'autre lors du déplacement de l'organe de coincement (24) en direction du côté distal pour prévenir la rotation dudit élément d'ancrage autour de l'élément à ancrer (8).

2. Dispositif d'ancrage selon la revendication 1, dans lequel l'organe de coincement (24) a un taraudage (70) en prise sur un filetage (13) présent sur l'élément à ancrer (8), de sorte qu'un entraînement en rotation de l'organe de coincement rapproche l'organe de coincement de l'embase (26) de l'étage d'extrémité (22E), qui est empêchée de se déplacer en direction du côté distal, pour déplacer le ou les éléments d'ancrage vers la position déployée.

3. Dispositif d'ancrage selon la revendication 2, comprenant au moins un étage d'ancrage (22) autre que l'étage d'extrémité (22E), dont l'embase (26) est libre de coulisser le long de l'élément à ancrer (8).

4. Dispositif d'ancrage selon l'une quelconque des revendications précédentes, dans lequel au moins un élément d'ancrage (28) comprend une première région (49) destinée à être en appui contre une zone (36) de forme complémentaire ménagée dans l'embase (26) d'un étage d'ancrage respectif (22) en position déployée, et une deuxième région (47) destinée à être en appui contre une zone de forme complémentaire de l'organe de coincement (24) ou de l'embase d'un étage d'ancrage voisin.

5. Dispositif d'ancrage selon la revendication 4, dans lequel la première région (49) d'au moins un élément est convexe, et la deuxième région (47) est sensiblement plane.

6. Dispositif d'ancrage selon la revendication 1, dans lequel les éléments d'ancrage (28) respectifs des étages d'ancrage (22, 22E) sont configurés pour s'étendre radialement par rapport à l'élément à ancrer (8) selon des directions décalées angulairement autour de l'élément à ancrer.

7. Dispositif d'ancrage selon l'une quelconque des revendications précédentes, dans lequel au moins un étage d'ancrage (22) comprend deux éléments d'ancrage (28) et au moins un élément de rappel (66) configuré pour exercer une force de rappel sur au moins l'un des deux éléments d'ancrage vers la position repliée.

8. Dispositif d'ancrage selon l'une quelconque des revendications précédentes, dans lequel le rapport entre l'encombrement radial en position déployée et l'encombrement radial en position repliée de chaque élément d'ancrage est supérieur ou égal 1,35.

9. Dispositif d'ancrage selon l'une quelconque des revendications précédentes, dans lequel au moins un élément d'ancrage (28) d'un étage d'ancrage (22) est articulé sur l'embase (26) dudit étage d'ancrage par l'intermédiaire d'au moins un axe (40) et un rail (60) portés l'un par ledit élément d'ancrage et l'autre par ladite embase, l'axe (40) étant déplaçable dans le rail lors du déplacement de l'élément d'ancrage entre la position repliée et la position déployée.

10. Dispositif d'ancrage selon l'une quelconque des revendications précédentes, dans lequel les éléments d'ancrage (28) au moins sont destinés à être noyés dans un matériau de remplissage (18) couplant mécaniquement les éléments d'ancrage à la structure (6) pour l'ancrage de l'élément à ancrer (8).

11. Procédé d'ancrage à une structure (6) d'un élément à ancrer (8) ayant un côté distal et un côté proximal, le procédé comprenant :
- agencer sur l'élément à ancrer des étages d'ancrage (22), chaque étage d'ancrage comprenant une embase (26) et au moins un élément d'ancrage (28) agencé dans une position repliée, dans lequel les étages d'ancrage (22) incluent un étage d'extrémité (22E) vers le côté distal et au moins un étage d'ancrage autre que l'étage d'extrémité (22E) ;
- agencer un organe de coincement (24) sur l'élément à ancrer (8) ;
- agencer sur l'élément à ancrer au moins un étage d'ancrage autre que l'étage d'extrémité (22E) ;
- déplacer l'organe de coincement (24) le long de l'élément à ancrer en direction du côté distal de façon à provoquer le déplacement du ou des éléments d'ancrage depuis la position repliée vers une position déployée radialement par rapport à l'élément à ancrer (8),
dans lequel l'embase de l'étage d'extrémité est couplée sur l'élément à ancrer de manière à être empêchée de se déplacer en direction du côté distal lors du déplacement de l'organe de coincement qui provoque le déploiement du ou des éléments d'ancrage,
dans lequel l'embase (26) de chaque étage d'ancrage autre que l'étage d'extrémité est déplaçable le long de l'élément à ancrer (8), le déplacement de l'organe de coincement (24) en direction du côté distal provoquant le rapprochement des embases entre elles, et
dans lequel l'embase (26) d'un étage d'ancrage comprend un premier élément de guidage (42) et au moins un élément d'ancrage d'un étage d'ancrage voisin comprend un deuxième élément de guidage (50), les premier et deuxième éléments de guidage (42, 50) coopérant l'un avec l'autre lors du déplacement de l'organe de coincement (24) en direction du côté distal pour prévenir la rotation dudit élément d'ancrage autour de l'élément à ancrer (8).

12. Procédé selon la revendication 11, dans lequel la portion de l'élément à ancrer (8) portant les étages d'ancrage (22) est déplacée dans un carottage jusqu'à une chambre de réception (20).

13. Procédé selon la revendication 12, dans lequel la chambre de réception (20) est au moins partiellement remplie d'un matériau de remplissage (18) dans lequel les éléments d'ancrage (28) sont noyés pour coupler mécaniquement les éléments d'ancrage (28) à la structure (6).

## Patentansprüche

1. Verankerungsvorrichtung, die zum Verankern mit einer Struktur (6) eines zu verankernden Elements (8) angepasst ist, welches eine distale Seite und eine proximale Seite aufweist, wobei die Verankerungsvorrichtung (10) umfasst:
- Verankerungsstufen (22), wobei jede Verankerungsstufe einen Sockel (26) und mindestens ein Verankerungselement (28) umfasst, welches an dem Sockel angelenkt ist, um zwischen einer eingeklappten Position und einer ausgeklappten Position radial in Bezug auf das zu verankernde Element verschiebbar zu sein; und
- ein Verklemmungsorgan (24), das entlang des zu verankernden Elements in Richtung der distalen Seite verschiebbar ist, um das Verschieben des oder der Verankerungselemente aus der eingeklappten Position in die ausgeklappte Position zu bewirken,
wobei die Verankerungsstufen (22) eine Endstufe (22E) zur distalen Seite hin, und mindestens eine andere Verankerungsstufe als die Endstufe (22E) beinhalten, wobei der Sockel (26) einer jeden anderen Verankerungsstufe als der Endstufe entlang des zu verankernden Elements (8) verschiebbar ist, wobei das Verschieben des Verklemmungsorgans (24) in Richtung der distalen Seite die Annäherung der Sockel untereinander bewirkt,
wobei der Sockel (26) der Endstufe (22E) an das zu verankernde Element (8) gekoppelt werden kann, um daran gehindert zu werden, sich beim Verschieben des Verklemmungsorgans (24), wodurch das Ausklappen des oder der Verankerungselemente (28) bewirkt wird, in Richtung der distalen Seite zu verschieben, und
wobei der Sockel (26) einer Verankerungsstufe ein erstes Führungselement (42) umfasst, und mindestens ein Verankerungselement einer benachbarten Verankerungsstufe ein zweites Führungselement (50) umfasst, wobei das erste und zweite Führungselement (42, 50) beim Verschieben des Verklemmungsorgans (24) in Richtung der distalen Seite miteinander zusammenwirken, um das Drehen des Verankerungselements um das zu verankernde Element (8) herum zu verhindern.

2. Verankerungsvorrichtung nach Anspruch 1, wobei das Verklemmungsorgan (24) ein Innengewinde (70) in Eingriff auf einem Außengewinde (13) aufweist, das auf dem zu verankernden Element (8) vorhanden ist, sodass ein in Drehung versetzen des Verklemmungsorgans das Verklemmungsorgan an den Sockel (26) der Endstufe (22E) annähert, der daran gehindert wird, sich in Richtung der distalen Seite zu verschieben, um das oder die Verankerungselemente in die ausgeklappte Position zu verschieben.

3. Verankerungsvorrichtung nach Anspruch 2, umfassend mindestens eine andere Verankerungsstufe (22) als die Endstufe (22E), deren Sockel (26) frei ist, um entlang des zu verankernden Elements (8) zu gleiten.

4. Verankerungsvorrichtung nach einem der vorstehenden Ansprüche, wobei mindestens ein Verankerungselement (28) einen ersten Bereich (49) umfasst, der dazu bestimmt ist, an einer Zone (36) in ergänzender Form, die in den Sockel (26) einer jeweiligen Verankerungsstufe (22) eingearbeitet ist, in ausgeklappter Position anzuliegen, und einen zweiten Bereich (47), der dazu bestimmt ist, an einer Zone in ergänzender Form des Verklemmungsorgans (24) oder des Sockels einer benachbarten Verankerungsstufe anzuliegen.

5. Verankerungsvorrichtung nach Anspruch 4, wobei der erste Bereich (49) mindestens eines Elements konvex ist, und der zweite Bereich (47) im Wesentlichen eben ist.

6. Verankerungsvorrichtung nach Anspruch 1, wobei die jeweiligen Verankerungselemente (28) der Verankerungsstufen (22, 22E) konfiguriert sind, um sich radial in Bezug auf das zu verankernde Element (8) in Richtungen zu erstrecken, die um das zu verankernde Element herum um einen Winkel versetzt sind.

7. Verankerungsvorrichtung nach einem der vorstehenden Ansprüche, wobei mindestens eine Verankerungsstufe (22) zwei Verankerungselemente (28) und mindestens ein Rückstellelement (66) umfasst, das konfiguriert ist, um eine Rückstellkraft auf mindestens eines der beiden Verankerungselemente zur eingeklappten Position hin auszuüben.

8. Verankerungsvorrichtung nach einem der vorstehenden Ansprüche, wobei das Verhältnis zwischen dem radialen Platzbedarf in ausgeklappter Position und dem radialen Platzbedarf in eingeklappter Position eines jeden Verankerungselements größer oder gleich 1,35 ist.

9. Verankerungsvorrichtung nach einem der vorstehenden Ansprüche, wobei mindestens ein Verankerungselement (28) einer Verankerungsstufe (22) an dem Sockel (26) der Verankerungsstufe anhand mindestens einer Achse (40) und einer Schiene (60) angelenkt ist, von denen einer von dem Verankerungselement und der andere von dem Sockel getragen werden, wobei die Achse (40) beim Verschieben des Verankerungselements zwischen der eingeklappten Position und der ausgeklappten Position in der Schiene verschiebbar ist.

10. Verankerungsvorrichtung nach einem der vorstehenden Ansprüche, wobei mindestens die Verankerungselemente (28) dazu bestimmt sind, in ein Füllmaterial (18) eingebettet zu sein, welches die Verankerungselemente zum Verankern des zu verankernden Elements (8) mechanisch mit der Struktur (6) koppelt.

11. Verfahren zum Verankern mit einer Struktur (6) eines zu verankernden Elements (8), das eine distale Seite und eine proximale Seite aufweist, wobei das Verfahren umfasst:
- Anordnen der Verankerungsstufen (22) an dem zu verankernden Element, wobei jede Verankerungsstufe einen Sockel (26) und mindestens ein Verankerungselement (28) umfasst, das in einer eingeklappten Position angeordnet ist, wobei die Verankerungsstufen (22) eine Endstufe (22E) zur distalen Seite hin, und mindestens eine andere Verankerungsstufe als die Endstufe (22E) beinhalten;
- Anordnen eines Verklemmungsorgans (24) an dem zu verankernden Element (8);
- Anordnen mindestens einer anderen Verankerungsstufe als der Endstufe (22E) an dem zu verankernden Element;
- Verschieben des Verklemmungsorgans (24) entlang des zu verankernden Elements in Richtung der distalen Seite, um die Verschiebung des oder der Verankerungselemente aus der eingeklappten Position in eine in Bezug auf das zu verankernde Element (8) radial ausgeklappte Position zu bewirken,
wobei der Sockel der Endstufe an das zu verankernde Element gekoppelt ist, um daran gehindert zu werden, sich beim Verschieben des Verklemmungsorgans, wodurch das Ausklappen des oder der Verankerungselemente bewirkt wird, in Richtung der distalen Seite zu verschieben,
wobei der Sockel (26) einer jeden anderen Verankerungsstufe als der Endstufe entlang des zu verankernden Elements (8) verschiebbar ist, wobei das Verschieben des Verklemmungsorgans (24) in Richtung der distalen Seite die Annäherung der Sockel untereinander bewirkt, und
wobei der Sockel (26) einer Verankerungsstufe ein erstes Führungselement (42) umfasst, und mindestens ein Verankerungselement einer benachbarten Verankerungsstufe ein zweites Führungselement (50) umfasst, wobei das erste und zweite Führungselement (42, 50) beim Verschieben des Verklemmungsorgans (24) in Richtung der distalen Seite miteinander zusammenwirken, um das Drehen des Verankerungselements um das zu verankernde Element (8) herum zu verhindern.

12. Verfahren nach Anspruch 11, wobei der Abschnitt des zu verankernden Elements (8), welcher die Verankerungsstufen (22) trägt, in einer Kernbohrung bis zu einer Aufnahmekammer (20) verschoben wird.

13. Verfahren nach Anspruch 12, wobei die Aufnahmekammer (20) mindestens teilweise mit einem Füllmaterial (18) gefüllt ist, in welches die Verankerungselemente (28) eingebettet sind, um die Verankerungselemente (28) mechanisch mit der Struktur (6) zu koppeln.

## Claims

1. An anchoring device adapted for anchoring to a structure (6) an element to be anchored (8) having a distal side and a proximal side, the anchoring device (10) comprising:
- anchoring stages (22), each anchoring stage comprising a base (26) and at least one anchoring element (28) articulated on the base so as to be movable between a folded position and a position deployed radially with respect to the element to be anchored; and
- a wedging member (24) movable along the element to be anchored in the direction of the distal side so as to cause movement of the anchoring element(s) from the folded position towards the deployed position,
wherein the anchoring stages (22) include an end stage (22E) towards the distal side and at least one anchoring stage other than the end stage (22E), wherein the base (26) of each anchoring stage other than the end stage is movable along the element to be anchored (8), the movement of the wedging member (24) in the direction of the distal side causing an approach of the bases to one another,
wherein the base (26) of the end stage (22E) may be coupled on the element to be anchored (8) so as to be prevented from moving in the direction of the distal side during the movement of the wedging member (24) which causes the deployment of the anchoring element(s) (28), and
wherein the base (26) of an anchoring stage comprises a first guide element (42) and at least one anchoring element of a neighbouring anchoring stage comprises a second guide element (50), the first and second guide elements (42, 50) cooperating with one another during the movement of the wedging member (24) in the direction of the distal side to prevent the rotation of said anchoring member around the member to be anchored (8).

2. The anchoring device according to claim 1, wherein the wedging member (24) has a thread (70) engaged on a tapping (13) present on the element to be anchored (8), so that driving the wedging member in rotation brings the wedging member closer to the base (26) of the end stage (22E), which is prevented from moving in the direction of the distal side, to move the anchoring element(s) towards the deployed position.

3. The anchoring device according to claim 2, comprising at least one anchoring stage (22) other than the end stage (22E), whose base (26) is free to slide along the element to be anchored (8).

4. The anchoring device according to any one of the preceding claims, wherein at least one anchoring element (28) comprises a first region (49) intended to bear against an area (36) with a complementary shape formed in the base (26) of a respective anchoring stage (22) in the deployed position, and a second region (47) intended to bear against an area with a complementary shape of the wedging member (24) or of the base of a neighbouring anchoring stage.

5. The anchoring device according to claim 4, wherein the first region (49) of at least one element is convex, and the second region (47) is substantially planar.

6. The anchoring device according to claim 1, wherein the respective anchoring elements (28) of the anchoring stages (22, 22E) are configured to extend radially with respect to the element to be anchored (8) according to directions angularly offset around the element to be anchored.

7. The anchoring device according to any one of the preceding claims, wherein at least one anchoring stage (22) comprises two anchoring elements (28) and at least one return element (66) configured to exert a biasing force on at least one of the two anchoring elements towards the folded position.

8. The anchoring device according to any one of the preceding claims, wherein the ratio between the radial bulk in the deployed position and the radial bulk in the folded position of each anchoring element is greater than or equal to 1.35.

9. The anchoring device according to any one of the preceding claims, wherein at least one anchoring element (28) of an anchoring stage (22) is articulated on the base (26) of said anchoring stage via at least one axis (40) and a rail (60) carried one by said anchoring element and the other by said base, the axis (40) being movable in the rail when the anchoring element moves between the folded position and the deployed position.

10. The anchoring device according to any one of the preceding claims, wherein at least the anchoring elements (28) are intended to be embedded in a filler material (18) mechanically coupling the anchoring elements to the structure (6) for anchoring the element to be anchored (8).

11. A method for anchoring to a structure (6) an element to be anchored (8) having a distal side and a proximal side, the method comprising:
- arranging anchoring stages (22) on the element to be anchored, each anchoring stage comprising a base (26) and at least one anchoring element (28) arranged in a folded position, wherein the anchoring stages (22) include an end stage (22E) towards the distal side and at least one anchoring stage other than the end stage (22E);
- arranging a wedging member (24) on the element to be anchored (8);
- arranging at least one anchoring stage other than the end stage (22E) on the element to be anchored;
- moving the wedging member (24) along the element to be anchored in the direction of the distal side so as to cause movement of the anchoring element(s) from the folded position towards a position deployed radially with respect to the element to be anchored (8),
wherein the base of the end stage is coupled on the element to be anchored so as to be prevented from moving in the direction of the distal side during the movement of the wedging member which causes the deployment of the anchoring element(s),
wherein the base (26) of each anchoring stage other than the end stage is movable along the element to be anchored (8), the movement of the wedging member (24) in the direction of the distal side causing an approach of the bases to one another, and
wherein the base (26) of an anchoring stage comprises a first guide element (42) and at least one anchoring element of a neighbouring anchoring stage comprises a second guide element (50), the first and second guide elements (42, 50) cooperating with one another during the movement of the wedging member (24) in the direction of the distal side to prevent the rotation of said anchoring member around the member to be anchored (8).

12. The method according to claim 11, wherein the portion of the anchoring element (8) carrying the anchoring stages (22) is moved in a coring up to a receiving chamber (20).

13. The method according to claim 12, wherein the receiving chamber (20) is at least partially filled with a filler material (18) in which the anchoring elements (28) are embedded to mechanically couple the anchoring elements (28) to the structure (6).
